(19) Europäisches Patentamt
European Patent Office
Office européen des brevets

(11) **EP 3 396 352 B1**

(12) **EUROPÄISCHE PATENTSCHRIFT**

(45) Veröffentlichungstag und Bekanntmachung des Hinweises auf die Patenterteilung:
**15.12.2021   Patentblatt 2021/50**

(51) Int Cl.:
*G01N 1/34* *(2006.01)*      *G01N 15/06* *(2006.01)*
*B03C 3/017* *(2006.01)*      *B03C 3/41* *(2006.01)*
*B03C 3/47* *(2006.01)*      *B03C 3/49* *(2006.01)*
*G01N 35/00* *(2006.01)*

(21) Anmeldenummer: **18169655.0**

(22) Anmeldetag: **26.04.2018**

(54) **VERFAHREN UND EINRICHTUNG ZUR EXTRAKTIVEN BESTIMMUNG DER KONZENTRATION VON EIN ODER MEHREREN STOFFEN**

METHOD AND DEVICE FOR THE EXTRACTIVE DETERMINATION OF THE CONCENTRATION OF ONE OR MORE SUBSTANCES

PROCÉDÉ ET DISPOSITIF DE DÉTERMINATION EXTRACTIVE DE LA CONCENTRATION D'UNE OU DE PLUSIEURS DES SUBSTANCES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.04.2017   DE 102017108977**
**26.04.2017   DE 102017108978**

(43) Veröffentlichungstag der Anmeldung:
**31.10.2018   Patentblatt 2018/44**

(73) Patentinhaber: **Dr. Födisch Umweltmesstechnik AG**
**04420 Markranstädt (DE)**

(72) Erfinder:
• **FÖDISCH, Holger, Dr.**
**04347 Leipzig (DE)**
• **SCHULZ, Jörg**
**04129 Leipzig (DE)**
• **TISCHER, Kai**
**04177 Leipzig (DE)**

(74) Vertreter: **Hecht, Jan-David**
**Patentanwaltskanzlei Dr. Hecht**
**Ranstädter Steinweg 28**
**04109 Leipzig (DE)**

(56) Entgegenhaltungen:
**US-A1- 2010 043 527      US-A1- 2011 197 656**
**US-A1- 2011 216 317**

**Beschreibung**

Die vorliegende Erfindung betrifft ein Verfahren zur extraktiven Bestimmung der Konzentration von ein oder mehreren Stoffen nach dem Oberbegriff von Anspruch 1 und eine Einrichtung zur extraktiven Bestimmung der Konzentration von ein oder mehreren Stoffen nach dem Oberbegriff von Anspruch 4.

Extraktive Messverfahren werden vielfältig eingesetzt, vor allem zur Überwachung und Steuerung von Industrieprozessen, aber auch in der Umwelttechnik zur Überwachung von Umwelteigenschaften.

Im Rahmen der vorliegenden Erfindung geht es um die Bestimmung der Konzentration von ein oder mehreren Stoffen. Dabei kann es sich um Feststoffe, beispielsweise Partikel, aber auch um Gase oder Aerosole, darunter auch chemische Stoffe, wie $SO_3$ oder dgl. handeln.

Beispielsweise werden Staubmessungen, insbesondere die Bestimmung der Feinstaubbelastung einer Umgebungsluft, mittels einer extraktiven Messung durchgeführt. Weitere Beispiele für Stoffe, deren Konzentration bestimmt werden soll, sind Aerosole und Pollen.

Im Rahmen einer extraktiven Messung wird einem Hauptgasstrom bzw. allgemein gesagt einem Milieu ein Gasstrom entnommen und einer bestimmten Messvorrichtung zugeführt. Der Gasstrom kann gasförmige, feste und flüssige Bestandteile, aber auch Mischformen, wie klebrige und feuchte, feste Stoffe enthalten. In der Messvorrichtung werden dann ein oder mehrere physikalische Parameter gemessen, um damit die Konzentration zumindest eines in dem Gasstrom enthaltenen Stoffes zu bestimmen.

Im Rahmen der lichtbasierten, extraktiven Staubkonzentrationsbestimmung wird beispielsweise der extrahierte Gasstrom in eine Streulichtmesszelle geleitet. Dort sind eine Infrarotlichtquelle und eine empfangende Photozelle so angeordnet, dass die Photozelle nicht direkt beleuchtet wird. Die von der Photozelle gemessene Lichteinwirkung wird daher ausschließlich durch Streulicht verursacht, dass von den im Gasstrom enthaltenen Partikeln, dem Staub, verursacht wird. Aufgrund einer bestimmten Korrelation zwischen Messsignal der Photozelle und Konzentration des Staubes, kann aus dem Messsignal eine Aussage über die Staubkonzentration abgeleitet werden.

Problematisch an solchen extraktiven Messverfahren ist, dass die Messvorrichtung sukzessive durch Stoffe, wie zum Beispiel Partikel aus der Gasstromdurchleitung verschmutzt, wodurch sich der Nullpunkt der Korrelation zwischen Messsignal und Konzentration des Stoffes verschiebt.

Dieser Effekt kann zwar durch Reinigung der Messvorrichtung beseitigt werden, allerdings ist dann eine regelmäßige Reinigung, im Extremfall sogar nach einer jeden Messung erforderlich, was insbesondere bei kontinuierlich betriebenen Messvorrichtungen nicht durchführbar ist.

Aus der DE 10 2011 082 069 A1 ist eine Vorrichtung bekannt, die Reinluft in die Messvorrichtung leitet, so dass ohne Einleitung des zu vermessenden Gasstromes mittels Zuführung von Reinluft in die Messvorrichtung eine Nullpunktbestimmung vor der eigentlichen Messung durchgeführt werden kann. Dieses Verfahren scheitert aber dann, wenn keine solche Reinluft zur Verfügung steht, weil beispielsweise in Bezug auf einen zu vermessenden Hauptgasstrom die Umgebungsluft ebenfalls schon eine sehr hohe Staubbelastung aufweist und industriell hergestellte Reinluft aus wirtschaftlichen oder standortbedingten Gründen nicht zur Verfügung steht. Außerdem ist dafür eine Weichentechnik mit zusätzlichen mechanisch beweglichen Vorrichtungen notwendig, was ein erhöhtes, verschleißbedingtes Ausfallrisiko mit sich bringt.

Weiter ist aus der DE 10 2014 017 220 A1 eine Vorrichtung bekannt, welche die Nullpunktbestimmung dadurch durchzuführt, dass die Messvorrichtung zwar gespült bzw. evakuiert wird, allerdings der Zustrom von Partikeln verhindert wird. Dies kann zum einen durch Schließen einer Klappe im Gasstromweg vor der Messvorrichtung erfolgen. Damit sind allerdings wiederum mechanisch bewegliche Teile und unter Umständen die Zuführung einer Reinluft verbunden, was ein erhöhtes verschleißbedingtes Ausfallrisiko und die Verfügbarkeit von Reinluft bedeutet. Andererseits werden Papier- oder Gazefilter eingesetzt, die den der Messvorrichtung zugeführten Gasstrom von Partikeln reinigen. Auch dabei sind allerdings mechanisch bewegliche Teile notwendig, um den Filter in den Gasstromweg zu bringen. Andererseits sind solche Filter nur begrenzt für die Partikel aufnahmefähig, so dass sie ausgetauscht bzw. gereinigt werden müssen. Dies ist wiederum mit einem erhöhten Wartungsaufwand verbunden, der insbesondere bei dauerhaft automatisch überwachenden Systemen nicht erwünscht ist. Außerdem entsteht bei einer Filterlösung eine häufig nicht erwünschte Druckdifferenz.

Die US 2011 216 317 A1 beschreibt die elektrostatische Bestimmung von Konzentrationen sogenannter ultrafeiner Partikel im Bereich 1 bis 500 nm auf elektrostatischer Basis, wobei ein Elektroabscheider besteht, an dem ionisierte Luftmoleküle abgeschieden werden.

Es ist daher Aufgabe der vorliegenden Erfindung, die extraktive Bestimmung von Stoffkonzentrationen so zu verbessern, dass diese sehr genau und dauerhaft wiederholbar erfolgen kann. Insbesondere soll eine Nullpunktbestimmung ohne zusätzliche mechanisch arbeitende Teile, externe Reinluft oder auszutauschende Filter ermöglicht werden.

Diese Aufgabe wird gelöst mit dem erfindungsgemäßen Verfahren nach Anspruch 1 und der erfindungsgemäßen Einrichtung nach Anspruch 4. Vorteilhafte Weiterbildungen sind in den Unteransprüchen und in der nachfolgenden Beschreibung zusammen mit den Figuren angegeben.

Erfinderseits wurde erkannt, dass diese Aufgabe in überraschender Weise dadurch besonders einfach gelöst werden kann, indem in die Messeinrichtung eine Vorrichtung zur Abscheidung der Staubpartikel aus dem Gasstrom mittels eines starken, elektrischen Feldes (häufig Elektroabscheider genannt) integriert wird.

Üblicherweise ist ein Elektroabscheider eine Vorrichtung, bei der Sprühelektroden zwischen Plattenelektroden angeordnet sind und zwischen beiden Elektroden eine hohe Potentialdifferenz angelegt wird. So werden elektrische Ladungen freigesetzt, die die Partikel im Gasstrom elektrisch aufladen. Diese aufgeladenen Partikel werden dann im elektrischen Feld zu der jeweils gegenpoligen Elektrode transportiert und dort abgelagert. Die im Fachbuch "Entstaubung industrieller Gase mit Elektrofiltern" von Harry J. White aus dem Jahr 1969 erläuterte mathematische Beziehung für den Abscheidegrad $\varepsilon$ bezogen auf einen Röhrenelektroabscheider von W. Deutsch aus dem Jahr 1922 zeigt den formelmäßigen Zusammenhang der Gasgeschwindigkeit v, die Länge der Röhre L, den Durchmesser der Röhre R und der Teilchenwanderungsgeschwindigkeit w.

$$\varepsilon = 1 - e^{-\frac{2L}{Rv}w}$$

Die Wanderungsgeschwindigkeit w ist dabei ein Maß für die Niederschlags- und Abscheidegeschwindigkeit der geladenen Teilchen im elektrischen Feld.

$$w = \frac{rE_0E_p}{2\pi\eta}$$

Dabei ist r der Teilchenradius, $\eta$ die dynamische Gaszähigkeit, $E_0$ die Aufladefeldstärke und $E_p$ die Abscheidefeldstärke. Die Wanderungsgeschwindigkeit ist damit direkt proportional zu $E_0E_p$, welche wiederrum direkt proportional zur Filterspannung und zum Filterstrom sind. Wird über diese Parameter also die Wanderungsgeschwindigkeit verdoppelt, kann die Filterlänge L halbiert werden.

Im Rahmen der vorliegenden Erfindung wird unter einem "Elektroabscheider" ganz allgemein eine Vorrichtung verstanden, die Partikel elektrisch auflädt und an einem Element mit einer entsprechenden Potentialdifferenz anlagert. Die Aufladung und Abscheidung können dabei räumlich vereint und/oder durch dieselben Elemente stattfinden, allerdings ist es auch möglich, in einem ersten Raum eine Aufladung und in einem zweiten Raum die Anlagerung durchzuführen. Außerdem können auch unterschiedliche Elemente für Aufladung und Anlagerung verwendet werden, beispielsweise durch die Verwendung eines Heizfilaments anstatt einer Sprühelektrode.

Das erfindungsgemäße Verfahren zur extraktiven Bestimmung der Konzentration von ein oder mehreren Stoffen, wobei ein Gasstrom einer Messvorrichtung zugeführt und darin zumindest ein physikalischer Parameter gemessen wird, um damit die Konzentration eines im Gasstrom enthaltenen Stoffes zu bestimmen, zeichnet sich also dadurch aus, dass vor oder während zumindest einer Messung der Gasstrom vor der Messvorrichtung mit einem Elektroabscheider behandelt wird, wobei

a) eine Nullpunktbestimmung der Messvorrichtung dadurch durchgeführt wird, dass die Elektroabschneidung bei einer bestimmten Potentialdifferenz für eine vorgegebene Zeit erfolgt und am Ende der Zeit bei der bestimmten Potentialdifferenz eine Messung durchgeführt wird, die den Nullpunkt der Messvorrichtung bildet,
und/oder

b) eine Linearitätsprüfung der Messvorrichtung dadurch durchgeführt wird, dass zumindest für eine bestimmte erste Zeit eine bestimmte erste schwächere Potentialdifferenz und für eine bestimmte zweite Zeit eine bestimmte zweite stärkere Potentialdifferenz angelegt wird und zumindest am Ende der jeweiligen ersten und zweiten Zeit eine Messung vorgenommen wird, wobei so viele aufeinander folgend stärker werdende Potentialdifferenzen angelegt werden, bis sich das Messsignal nicht mehr verändert und der Nullpunkt erreicht ist.

Im Rahmen der vorliegenden Erfindung wird unter "Stoff" ganz allgemein jegliche Substanz verstanden, also beispielsweise nicht nur Feststoffe, wie Stäube, sondern auch Gase, Moleküle, Aerosole und deren Mischformen.

Erfindungsgemäß ist vorgesehen, dass eine Staubkonzentration bestimmt wird, wobei dazu bevorzugt eine Streulichtmessung verwendet wird. Es sind allerdings auch andere Messverfahren möglich, um die Staubkonzentration zu bestimmen, wie beispielsweise eine triboelektrische Messung entsprechend der DE 101 21 620 A1 oder eine Transmissionsmessung.

Unter "Staub" wird im Rahmen der vorliegenden Erfindung in allgemeinster Formulierung feste Partikel und Aerosole verschiedener Größe und verschiedenen Ursprungs verstanden, die einen gewissen Zeitraum in Gasen, insbesondere in der Luft, suspendiert bleiben können.

In einer vorteilhaften Weiterbildung ist vorgesehen, dass die Elektroabscheidung mit einer Potentialdifferenz von kleiner-gleich 30 kV, bevorzugt kleiner-gleich 15 kV, insbesondere kleiner-gleich 10 kV betrieben wird. Elektroabscheider sind zwar schon aus der Industrie bekannt, wo beispielsweise Rauchgase gereinigt werden sollen, allerdings werden diese Elektroabscheider mit Potentialdifferenzen im Bereich 20 kV bis 80 kV betrieben. Solche Potentialdifferenzen stellen hohe Fehlereinflussquellen für Messvorgänge dar. Bei geringeren Potentialdifferenzen von kleiner-gleich 20kV ist die Messgenauigkeit wesentlich verbessert und der sicherheitstechnische Aufwand verringert.

In einer vorteilhaften Weiterbildung ist vorgesehen, dass eine Konditionierung, beispielsweise in Form einer Trocknung und/oder Verdünnung des Gasstroms vorgenommen wird. Damit wird die Messgenauigkeit insbesondere bei hohen Stoffkonzentrationen, z.B. Partikelkonzentrationen wesentlich verbessert.

Erfindungsgemäß ist vorgesehen, dass eine Nullpunktbestimmung dadurch durchgeführt wird, dass die Elektroabscheidung bei einer bestimmten Potentialdifferenz für eine vorgegebene Zeit erfolgt und am Ende der Zeit während gleichzeitiger Aufladung eine Messung durchgeführt wird. Die entsprechende Zeit und die entsprechende Potentialdifferenz, die notwendig sind, jegliche Stoffe, z.B. Partikel aus dem Gasstrom im Elektroabscheider abzuscheiden, werden experimentell vorab bestimmt. Beispielsweise beträgt die Potentialdifferenz 10 kV und die Zeit 3 bis 4 min.

Erfindungsgemäß ist vorgesehen, dass eine Linearitätsprüfung dadurch durchgeführt wird, dass zumindest für eine bestimmte erste Zeit eine bestimmte erste schwächere Potentialdifferenz und für eine bestimmte zweite Zeit eine bestimmte zweite stärkere Potentialdifferenz eingesetzt wird und zumindest am Ende der jeweiligen ersten und zweiten Zeit eine Messung vorgenommen wird. Dann kann einfach kontrolliert werden, ob die Messvorrichtung noch entsprechend ihrer Kennlinie misst, und ggf. auf eine Neukalibrierung verzichtet werden. Beispielsweise kann eine Messung bei ausgeschaltetem Elektroabscheider gestartet werden, anschließend der Elektroabscheider mit 1 kV Potentialdifferenz für 20 s betrieben und nach Abschluss der 20 s eine zweite Messung vorgenommen und dann der Elektroabscheider mit 2 kV Potentialdifferenz für 20 s betrieben und nach Abschluss dieser 20 s eine dritte Messung vorgenommen werden, usw.

In diesem Zusammenhang ist vorgesehen, dass so viele aufeinander folgend stärker werdende Potentialdifferenzen angelegt werden, bis sich das Messsignal nicht mehr verändert. Dieser letzte Messpunkt bildet dann zugleich den Nullpunkt ab.

In einer vorteilhaften Weiterbildung ist vorgesehen, dass die Zeiten jeweils wenige Sekunden, zum Beispiel 20 Sekunden, betragen und die Erhöhung der Potentialdifferenz in geeigneten Sprüngen, zum Beispiel 1 kV, erfolgt.

In einer vorteilhaften Weiterbildung ist vorgesehen, dass während der Elektroabscheidung der Volumenstrom des Gasstroms reduziert, bevorzugt zumindest halbiert, insbesondere zumindest geviertelt wird. Dadurch wird die Messvorrichtung noch ausreichend gespült, aber die Wirksamkeit der Elektroabscheidung auch bei geringen Potentialdifferenzen verbessert, da entsprechend der auf Seite 3 erwähnten Deutsch-Gleichung sich mit sinkender Gasgeschwindigkeit v der Abscheidegrad $\varepsilon$ erhöht. Der Volumenstrom umfasst sowohl die Menge, als auch die Geschwindigkeit des Stoffs. Somit könnte der Volumenstrom dadurch verringert werden, dass die Stoffmenge reduziert wird, und/oder dadurch, dass die Geschwindigkeit des Gasstroms reduziert wird.

In einer vorteilhaften Weiterbildung ist vorgesehen, dass vor der Nullpunktsetzung oder der Linearitätsbestimmung eine bestimmte Zeit, im folgenden Vorlaufzeit genannt, der Messvorrichtung ein mit dem Elektroabscheider behandelter Gasstrom zugeführt wird. Dadurch wird die Nullpunktbestimmung exakter, weil die Messvorrichtung vollständig mit dem nach der Elektroabscheidung behandelten Gasstrom gefüllt ist. Die optimale Vorlaufzeit ist abhängig von dem Volumen der Messvorrichtung, dem Volumen des Elektroabscheiders und dem Volumen der Gaszugänge.

In einer vorteilhaften Weiterbildung ist vorgesehen, dass nach der Nullpunktsetzung oder der Linearitätsbestimmung eine bestimmte Zeit, im folgenden Nachlaufzeit genannt, der Messvorrichtung ein nicht mit dem Elektroabscheider behandelte Gasstrom zugeführt wird. Dadurch wird die eigentliche Messung, also nicht die Messung zur Nullpunktbestimmung, exakter, weil die Messvorrichtung wieder vollständig mit dem unbehandelten Gasstrom gefüllt ist. Die optimale Nachlaufzeit ist abhängig von dem Volumen der Messvorrichtung, dem Volumen des Elektroabscheiders und dem Volumen der Gaszugänge.

Solche Vorlaufzeiten und Nachlaufzeiten können allerdings auch unabhängig von Nullpunktbestimmung und Linearitätsbestimmung bei der Verwendung des Elektroabscheiders eingesetzt werden.

Selbständiger Schutz wird beansprucht für die erfindungsgemäße Einrichtung zur extraktiven Bestimmung der Konzentration von ein oder mehreren Stoffen, mit einer Vorrichtung zur Zuführung eines Gasstroms zu einer Messvorrichtung zur Messung zumindest eines physikalischen Parameters und mit einer Steuerungs- und Messsignalauswertungsvorrichtung, wobei die Messvorrichtung Mittel zur Bestimmung der Staubkonzentration durch Streulichtmessung, Transmissionsmessung oder triboelektrische Messung aufweist, die sich dadurch auszeichnet, dass in Strömungsrichtung des Gasstromes vor der Messeinrichtung eine Elektroabscheidungsvorrichtung angeordnet ist, und die Steuerungs- und Messsignalauswertungsvorrichtung angepasst ist,

a) eine Nullpunktbestimmung der Messvorrichtung dadurch durchzuführen, dass die Elektroabscheidung bei einer bestimmten Potentialdifferenz für eine vorgegebene Zeit erfolgt und am Ende der Zeit bei der bestimmten Potentialdifferenz eine Messung durchgeführt wird, die den Nullpunkt der Messvorrichtung bildet,
und/oder

b) eine Linearitätsprüfung der Messvorrichtung dadurch durchzuführen, dass zumindest für eine bestimmte erste Zeit eine bestimmte erste schwächere Potentialdifferenz und für eine bestimmte zweite Zeit eine bestimmte zweite stärkere Potentialdifferenz angelegt wird und zumindest am Ende der jeweiligen ersten und zweiten Zeit eine Messung vorgenommen wird, wobei so viele aufeinander folgend stärker werdende Potentialdifferenzen angelegt werden, bis sich das Messsignal nicht mehr verändert und der Nullpunkt erreicht ist.

In einer vorteilhaften Weiterbildung ist vorgesehen, dass die erfindungsgemäße Einrichtung ausgebildet ist, das erfindungsgemäße Verfahren durchzuführen.

In einer vorteilhaften Weiterbildung ist vorgesehen, dass die Elektroabscheidungsvorrichtung als Kammer ausgebildet ist, in der zumindest eine Sprühelektrode, die bevorzugt als Metallnadel, ausgebildet ist, und zumindest eine elektrisch leitfähige Platte, die bevorzugt aus einem Metall ausgebildet ist, angeordnet sind. Dann ist die Elektroabscheidung besonders effektiv. Durch Verwendung einer in sich stabilen Nadel als Sprühelektrode kann außerdem auf eine Spannvorrichtung, wie sie für Drahtmaterial erforderlich ist, verzichtet werden. Außerdem verschleißt eine solche Nadel deutlich langsamer als ein vergleichbarer Metalldraht.

In einer vorteilhaften Weiterbildung ist vorgesehen, dass die Sprühelektrode eine Dicke von kleinergleich 1 mm, bevorzugt kleiner-gleich 0,5 mm und insbesondere kleiner-gleich 0,25 mm aufweist. Dann erfolgt die elektrische Aufladung auch für sehr kleine Elektroabscheidungsvorrichtungen und geringe Potentialdifferenzen besonders effektiv.

In einer vorteilhaften Weiterbildung ist vorgesehen, dass die elektrisch leitfähige Platte als zur Sprühelektrode konzentrische Röhre ausgebildet ist. Somit kann die Elektroabscheidungsvorrichtung besonders kompakt gebaut werden.

In einer vorteilhaften Weiterbildung ist vorgesehen, dass die Kammer der Elektroabscheidungsvorrichtung eine innere lichte Höhe von kleiner-gleich 30 cm, bevorzugt kleiner-gleich 10 cm, insbesondere kleinergleich 3 cm aufweist.

In einer vorteilhaften Weiterbildung ist vorgesehen, dass die Kammer der Elektroabscheidungsvorrichtung eine innere lichte Weite von kleiner-gleich 10 cm, bevorzugt kleiner-gleich 5 cm, insbesondere kleinergleich 2 cm aufweist.

In einer vorteilhaften Weiterbildung ist vorgesehen, dass das Verhältnis von Durchmesser zur Höhe der Kammer der Elektroabscheidungsvorrichtung ca. 1 zu 2 beträgt. Die bereits oben erwähnte Deutsch-Gleichung zeigt auch, dass mit steigender Länge L und mit sinkenden Rohrdurchmesser R der Abscheidegrad steigt. Untersuchungen zeigten jedoch Grenzen in der Minimierung des Rohrdurchmessers, wobei die Grenze bei einem Durchmesser von 5 mm liegt.

In einer vorteilhaften Weiterbildung ist vorgesehen, dass die umgebende Kammer der Elektroabscheidungsvorrichtung aus einem nichtleitenden Materialgebildet ist. Somit kann die Elektroabscheidungsvorrichtung gegenüber der Messung störunempfindlich gestaltet und ausreichend Schutz vor gesundheitsgefährdenden Stromschlägen gewährleistet werden.

In einer vorteilhaften Weiterbildung ist vorgesehen, dass die Kammer der Elektroabscheidungsvorrichtung einen größeren Querschnitt aufweist als eine Zuleitung für den Gasstrom zu der Kammer. Somit wird die die Strömungsgeschwindigkeit des Gasstromes innerhalb der Elektroabscheidungsvorrichtung verringert und damit die Verweilzeit der Partikel erhöht.

Die Merkmale und weitere Vorteile der vorliegenden Erfindung werden im Folgenden anhand der Beschreibung eines bevorzugten Ausführungsbeispiels im Zusammenhang mit den Figuren deutlich werden. Dabei zeigen rein schematisch:

Fig. 1     die erfindungsgemäße Einrichtung in einer Blockbilddarstellung,

Fig. 2     die Elektroabscheidevorrichtung der erfindungsgemäßen Einrichtung nach Fig. 1, in einer Schnittansicht von der Seite und

Fig. 3     die Elektroabscheidevorrichtung nach Fig. 4 in einer Schnittansicht von oben.

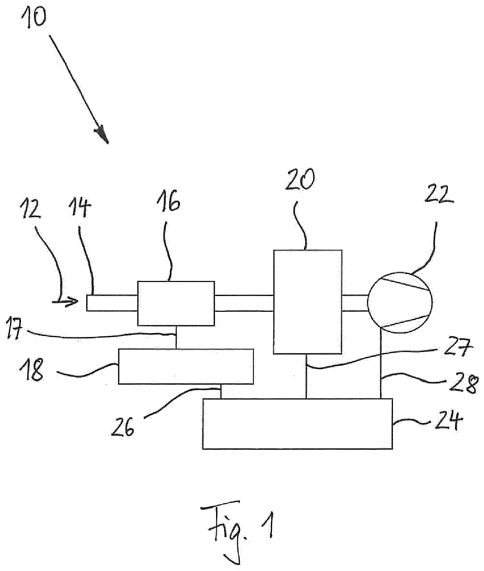

In Fig. 1 ist zu erkennen, dass die erfindungsgemäße Einrichtung 10 in Strömungsrichtung eines Gasstroms 12 gesehen, eine Ansaugung 14 aus einem nicht dargestellten Hauptgasstrom (beispielsweise einem Schornstein oder einer städtischen Umgebungsluft), eine Elektroabscheidevorrichtung 16 mit einer über eine Elektroleitung 17 verbundene Hochspannungsversorgung 18, eine Messvorrichtung 20, eine durchströmungserzeugende Ansaugvorrichtung 22 und eine Steuerungs- und Messsignalauswertungsvorrichtung 24 aufweist. Die Steuerungs- und Messsignalauswertungsvorrichtung 24 ist über entsprechende Verbindungen 26, 27, 28 dabei sowohl mit der Hochspannungsversorgung 18, der Messvorrichtung 20 als auch der durchströmungserzeugenden Ansaugvorrichtung 22 verbunden, wobei sie den Betrieb dieser drei Elemente 18, 20, 22 steuert und zugleich auch die Messsignale der Messvorrichtung 20 empfängt auswertet.

Bei der Messvorrichtung 20 handelt es sich um eine solche, die nach dem Prinzip der optischen Streulichtmessung auf Infrarotbasis in üblicher Art und Weise arbeitet.

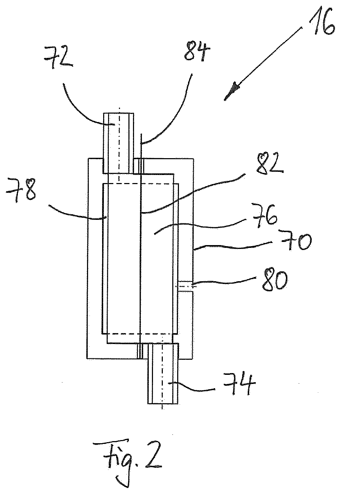

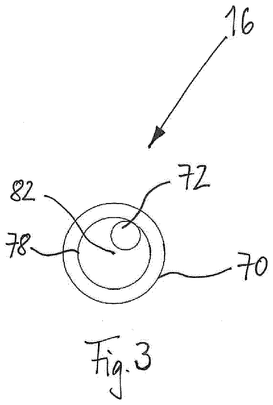

In den Fig. 2 und 3 ist die erfindungsgemäß eingesetzte Elektroabscheidungsvorrichtung 16 in Schnittansichten gezeigt.

Es ist zu erkennen, dass die Elektroabscheidungsvorrichtung 16 ein elektrisch isolierendes Gehäuse 70 aufweist. Das Gehäuse ist als Zylinder ausgebildet mit zwei versetzt zueinander gegenüberliegend angeordneten Gasleitungen 72, 74, nämlich einer Gaszuleitung 72 und einer Gasableitung 74.

Im Inneren des Gehäuses 70 ist eine Kammer 76 ausgebildet, die von einer hohlzylindrischen Metallhülse 78 begrenzt wird. Diese Metallhülse 78 bildet die Abscheideelektrode 78, an die über den elektrischen Anschluss 80 ein Potential angelegt werden kann. Hierbei handelt es sich vorzugsweise um Erdpotential.

In der Mitte der Kammer 76 ist eine Sprühelektrode 82 so angeordnet, dass die Abscheideelektrode 78 hierzu konzentrisch angeordnet ist. Diese Sprühelektrode 82 besitzt eine Dicke von kleiner-gleich 1 mm. Sie ist bevorzugt als glatte Industrienadel 82 aus Edelstahl ausgebildet, weil diese im Gegensatz zu Drähten und dergleichen eine sehr lange Lebensdauer im Betrieb aufweist und außerdem keiner gesonderten Spannmittel bedarf. Außerdem besitzt die Sprühelektrode 82 einen elektrischen Anschluss 84 zur Anlegung eines Potentials, vorliegend bevorzugt eine hohe Gleichspannung, zum Beispiel von kleiner-gleich 15 kV, wobei die Spannungsversorgung vorzugsweise gepulst erfolgt. Die Bezugsspannung an der Sprühelektrode kann dabei sowohl positiv als auch negativ sein.

Dadurch, dass die Querschnittsfläche der Gaszuleitung 72 wesentlich geringer ist, als die deutlich größere Querschnittsfläche der Kammer 76, wobei beispielsweise ein Verhältnis von beispielsweise 1 zu 10 besteht, wird die Strömungsgeschwindigkeit in der Kammer 76 wesentlich verlangsamt, so dass die Elektroabscheidung durch eine Geschwindigkeitsabsenkung des Gasstromes sehr wirksam erfolgt.

Die Elektroabscheidung erfolgt dabei durch das Anlegen von beispielsweise 15 kV negativ gepulste Gleichspannung an der Sprühelektrode 82, womit Elektronen freigesetzt werden. Diese Elektronen werden in dem sich ausbildenden sehr starken elektrischen Feld zwischen der Sprühelektrode 82 und der Abscheideelektrode 78 stark beschleunigt und treffen u.a. auf die Staubpartikel 60. Diese Staubpartikel 60 werden dadurch elektrisch aufgeladen. Aufgrund des starken elektrischen Feldes werden die aufgeladenen Staubpartikel 60 zur Abscheideelektrode 78 transportiert. Dort werden sie entladen und aufgrund von Haftkräften angelagert.

Auf diese Weise kann eine vollständige Filterung der Staubpartikel 60 aus dem Gas erfolgen.

Die erfindungsgemäße Vorrichtung 10 kann nun beispielsweise folgendermaßen benutzt werden:

## 1. Nullpunktbestimmung

Vor jeder oder nach einer bestimmten Anzahl von Staubkonzentrationsmessungen mit der Messvorrichtung 20 sollte eine Nullpunktbestimmung erfolgen, um die Messgenauigkeit langfristig garantieren zu können. Dabei gilt, dass die Nullpunktbestimmung umso häufiger durchgeführt werden muss, je höher die umgebende Staubkonzentration ist. Idealerweise erfolgt sie vor jeder Staubkonzentrationsmessung oder bei kontinuierlich messenden Einrichtungen automatisch, zum Beispiel im zeitlichen Abstand von 4 Stunden.

Für die Durchführung der Nullpunktbestimmung wird der angesaugte Gasstrom 12 verringert, so dass weniger Staubpartikel 60 in die erfindungsgemäße Vorrichtung 10 gelangen, aber dennoch eine Spülung der Messvorrichtung 20 erfolgt. Beispielsweise wird die Geschwindigkeit des Gasstroms 12 durch geeignete Ansteuerung der durchströmungserzeugenden Ansaugvorrichtung 22 über die Steuerungs- und Messsignalauswertungsvorrichtung 24 halbiert. Durch den reduzierten Fluss des Gasstroms 12 wird die Strömungsgeschwindigkeit in der Kammer 76 so weit herabgesetzt, dass zum einen der Abscheidegrad entsprechend der Deutsch-Gleichung sehr effizient ist und zum anderen keine an der Abscheideelektrode 78 anhaftenden Staubpartikel 60 abgelöst und in die Messvorrichtung 20 transportiert werden.

Dann wird die Elektroabscheidevorrichtung 16 für einige Minuten, zum Beispiel 2 Minuten, betrieben, wobei an der Sprühelektrode 82 zum Beispiel ein negatives Potential von 15 kV als gepulste Gleichspannung über die Hochspannungsversorgungsvorrichtung 18 angelegt wird.

Durch die elektrische Aufladung der sich in der Kammer 76 befindlichen Staubpartikel 60 werden diese an der Abscheideelektrode 78 abgeschiedenen.

Nach einer geringen Vorlaufzeit wird während der Elektroabscheidung ein Messvorgang in der Messvorrichtung 20 ausgelöst. Diese Messung bildet den Nullpunkt der Messvorrichtung 20, mit dem das Messsignal bei regulären Messungen mit der Messvorrichtung 20 korrigiert wird.

Für die Durchführung der regulären Messung wird die Elektroabscheideeinrichtung 16 abgeschaltet und es wird die Geschwindigkeit des Gasstromes 12 wieder auf Normalmaß verstärkt. Außerdem wird idealerweise einige Zeit (Nachlaufzeit) gewartet, bis sich wieder ein Gleichgewicht des Gasstroms 12 in der Messvorrichtung 20 eingestellt hat. Der gesamte Vorgang der Nullpunktsetzung wird in einer Zeit kleiner-gleich 5 Minuten durchgeführt. Erst dann wird die reguläre Messung gestartet.

Um die erfindungsgemäße Einrichtung 10 vollständig wartungsfrei einzurichten, kann die reguläre Geschwindigkeit des Gasstromes 12 (also bei Nichtbetrieb des Elektroabscheiders) so eingestellt sein, dass sich in der Kammer 76 der Elektroabscheidevorrichtung 16 eine Gasgeschwindigkeit einstellt, die so groß ist, dass bestehende Haftkräfte zwischen Abscheideelektrode 78 und Staubpartikel 60 überwunden werden.

Die so aus der Elektroabscheidevorrichtung 16 ausgewehten Staubpartikel 60 beeinträchtigen die Messung nicht, da ihre Konzentration im Vergleich zur üblichen gemessenen Staubkonzentration sehr gering ist.

Andererseits könnte auch eine Gegenspülung unter Umkehrung des Flusses erfolgen, wodurch die Staubpartikel aus der dem Einlass 12 der erfindungsgemäßen Einrichtung 10 ausgetragen werden würden.

## 2. Linearitätsbestimmung

Anstelle der Nullpunktbestimmung oder auch zusätzlich kann eine Linearitätsbestimmung durchgeführt werden, beispielsweise um eine Kalibrierung oder eine Neukalibrierung der Messvorrichtung 20 vorzunehmen.

Dabei werden im Wesentlich dieselben Prozessschritte wie bei der Nullpunktbestimmung durchgeführt, mit der Ausnahme, dass das angelegte Potential und die Zeitdauer anders gewählt werden und zahlreiche Messungen nacheinander erfolgen.

Genauer gesagt wird vor dem Einschalten der Elektroabscheidevorrichtung 16 eine erste Messung vorgenommen (dies kann allerdings auch entfallen), dann nach Absenkung der Gasstromgeschwindigkeit, für beispielsweise 20 s an die Sprühelektrode eine negative gepulste Gleichspannung von beispielsweise 1 kV angelegt und nach Ablauf dieser 20 s eine zweite Messung durchgeführt, anschließend für beispielsweise 20 s eine Spannung von beispielsweise 2 kV angelegt und nach Ablauf dieser 20 s eine dritte Messung durchgeführt. Diese Potentialsteigerung und anschließende Messung kann solange durchgeführt werden, bis keine Messsignalveränderungen mehr erfolgen. Damit ist der Nullpunkt erreicht.

Über die experimentell bestimmte Abhängigkeit des Messsignals der Messvorrichtung 20 von dem angelegten Potential kann ermittelt werden, ob Messeinrichtung 20 noch richtig kalibriert ist.

Andererseits kann auch eine Neukalibrierung der Messvorrichtung 20 vorgenommen werden.

Auch wenn die vorliegende Erfindung anhand der speziellen Beispiele der Nullpunktbestimmung bzw. der Linearitätsbestimmung erläutert wurde, ist doch klar, dass sie nicht darauf beschränkt ist. Beispielsweise könnte die Elektroabscheidung vorteilhaft auch während einer regulären Messung benutzt werden, um eine Filterung bestimmter abscheidbarer Stoffe vorzunehmen oder um weitere sich in einem Gasstrom befindliche Stoffe zu bestimmen. Andererseits könnte auch die Stoffkonzentration gezielt reduziert werden, beispielsweise um den Messbereich der Messvorrichtung gezielt ausnutzen zu können.

Aus der vorstehenden Darstellung ist deutlich geworden, dass mit der vorliegenden Erfindung eine extraktive Bestimmung der Konzentration ein oder mehrerer Stoffe unter Messung zumindest eines physikalischen Parameters sehr genau und dauerhaft wiederholbar erfolgen kann. Dabei kann eine Nullpunktbestimmung ohne zusätzliche Ventile, Luftführungen, Reinluftanschlüsse und/oder auszuwechselnde Filter auch im Dauerbetrieb erfolgen. Außerdem können alternativ oder zusätzlich auch Linearitätsprüfungen durchgeführt werden.

Auch wenn die vorstehende Darstellung des bevorzugten Ausführungsbeispiels sich auf eine Staubkonzentrationsbestimmung unter Verwendung einer Streulichtmessung bezog, ist doch klar, dass diese Erfindung auch für die Staubkonzentrationsbestimmung beispielsweise mittels triboelektrischer Messungen und auch für gänzlich andere extraktive Messungen physikalischer Parameter vorteilhaft verwendet werden kann.

Soweit nichts anders angegeben ist, können sämtliche Merkmale der vorliegenden Erfindung frei miteinander kombiniert werden, solange sie in den Umfang der beigefügten Ansprüche fallen. Auch die in der Figurenbeschreibung beschriebenen Merkmale können, soweit nichts anderes angegeben ist, als Merkmale der Erfindung frei mit den übrigen Merkmalen kombiniert werden. Dabei können gegenständliche Merkmale der Einrichtung auch im Rahmen des Verfahrens umformuliert zu Verfahrensmerkmalen Verwendung finden und Verfahrensmerkmale im Rahmen der Einrichtung umformuliert zur Einrichtungsmerkmalen. Die Erfindung ist in den beigefügten Ansprüchen definiert.

### Bezugszeichenliste

| | |
|---|---|
| 10 | erfindungsgemäße Einrichtung |
| 12 | Gasstrom |
| 14 | Ansaugung |
| 16 | Elektroabscheidevorrichtung |
| 17 | Elektroleitung |
| 18 | Hochspannungsversorgung |
| 20 | Messvorrichtung, Streulichtmessung |
| 22 | Durchströmung erzeugende Ansaugvorrichtung |
| 24 | Steuerungs- und Messsignalauswertungsvorrichtung |
| 26, 27, 28 | Verbindungen zur Steuerungs- und Messsignalauswertungsvorrichtung 24 |
| 60 | Staubpartikel |
| 70 | Gehäuse der Elektroabscheidungsvorrichtung 16 |
| 72 | Gaszuleitung |
| 74 | Gasableitung |
| 76 | Kammer |
| 78 | Abscheideelektrode |
| 80 | elektrischer Anschluss |
| 82 | Sprühelektrode |
| 84 | elektrischer Anschluss |

### Patentansprüche

1.  Verfahren zur extraktiven Bestimmung der Konzentration von ein oder mehreren Stoffen, wobei ein Gasstrom (12) einer Messvorrichtung (20) zugeführt und darin zumindest ein physikalischer Parameter gemessen wird, um damit die Konzentration eines im Gasstrom enthaltenen Stoffes zu bestimmen, wobei mit der Messvorrichtung (20) eine Staubkonzentration durch eine Streulichtmessung, eine Transmissionsmessung oder eine triboelektrische Messung bestimmt wird, wobei vor oder während zumindest einer Messung der Gasstrom (12) vor der Messvorrichtung (20) mit einem Elektroabscheider (16) behandelt wird, wobei

a) eine Nullpunktbestimmung der Messvorrichtung (20) dadurch durchgeführt wird, dass die Elektroabscheidung (16) bei einer bestimmten Potentialdifferenz für eine vorgegebene Zeit erfolgt und am Ende der Zeit bei der bestimmten Potentialdifferenz eine Messung (20) durchgeführt wird, die den Nullpunkt der Messvorrichtung bildet,
und/oder

b) eine Linearitätsprüfung der Messvorrichtung (20) dadurch durchgeführt wird, dass zumindest für eine bestimmte erste Zeit eine bestimmte erste schwächere Potentialdifferenz und für eine bestimmte zweite Zeit eine bestimmte zweite stärkere Potentialdifferenz angelegt wird und zumindest am Ende der jeweiligen ersten und zweiten Zeit eine Messung (20) vorgenommen wird, wobei so viele aufeinander folgend stärker werdende Potentialdifferenzen angelegt werden, bis sich das Messsignal nicht mehr verändert und der Nullpunkt erreicht ist.

2. Verfahren nach Anspruch 1, **dadurch gekennzeichnet, dass** die Elektroabscheidung (16) mit einer Potentialdifferenz von kleiner-gleich 30kV, bevorzugt kleiner-gleich 15 kV, höchst bevorzugt kleiner-gleich 10 kV betrieben wird.

3. Verfahren nach Anspruch 1 oder 2, **dadurch gekennzeichnet, dass** eine Konditionierung, bevorzugt als Trocknung und/oder Verdünnung des Gasstromes (12) vorgenommen wird.

4. Einrichtung (10) zur extraktiven Bestimmung der Konzentration von ein oder mehreren Stoffen, mit einer Vorrichtung zur Zuführung eines Gasstroms (12) zu einer Messvorrichtung (20) zur Messung zumindest eines physikalischen Parameters und mit einer Steuerungs- und Messsignalauswertungsvorrichtung (24), wobei die Messvorrichtung (20) Mittel zur Bestimmung der Staubkonzentration durch Streulichtmessung, Transmissionsmessung oder triboelektrische Messung aufweist, **dadurch gekennzeichnet, dass** in Strömungsrichtung des Gasstromes (12) vor der Messeinrichtung (20) eine Elektroabscheidungsvorrichtung (16) angeordnet ist und die Steuerungs- und Messsignalauswertungsvorrichtung (24) angepasst ist,

a) eine Nullpunktbestimmung der Messvorrichtung (20) dadurch durchzuführen, dass die Elektroabschneidung (16) bei einer bestimmten Potentialdifferenz für eine vorgegebene Zeit erfolgt und am Ende der Zeit bei der bestimmten Potentialdifferenz eine Messung (20) durchgeführt wird, die den Nullpunkt der Messvorrichtung bildet,
und/oder

b) eine Linearitätsprüfung der Messvorrichtung (20) dadurch durchzuführen, dass zumindest für eine bestimmte erste Zeit eine bestimmte erste schwächere Potentialdifferenz und für eine bestimmte zweite Zeit eine bestimmte zweite stärkere Potentialdifferenz angelegt wird und zumindest am Ende der jeweiligen ersten und zweiten Zeit eine Messung (20) vorgenommen wird, wobei so viele aufeinander folgend stärker werdende Potentialdifferenzen angelegt werden, bis sich das Messsignal nicht mehr verändert und der Nullpunkt erreicht ist.

5. Einrichtung (10) nach Anspruch 4, **dadurch gekennzeichnet, dass** die Einrichtung (10) ausgebildet ist, das Verfahren nach einem der Ansprüche 1 bis 3 durchzuführen.

6. Einrichtung (10) nach Anspruch 4 oder 5, **dadurch gekennzeichnet, dass** die Elektroabscheidungsvorrichtung (10) als Kammer (76) ausgebildet ist, in der zumindest eine metallische Sprühelektrode (82), die bevorzugt als Metallnadel ausgebildet ist, und zumindest eine elektrisch leitfähige Platte (78) angeordnet sind.

7. Einrichtung (10) nach Anspruch 6, **dadurch gekennzeichnet, dass** die elektrisch leitfähige Platte als zur Sprühelektrode (82) konzentrische Hülse (78) ausgebildet ist.

8. Einrichtung (10) nach einem der Ansprüche 6 oder 7, **dadurch gekennzeichnet, dass** die Kammer (76) der Elektroabscheidungsvorrichtung (16) eine innere lichte Höhe von kleiner-gleich 30 cm, bevorzugt von kleiner-gleich 10 cm, höchst bevorzugt von kleiner-gleich 3 cm aufweist

9. Einrichtung (10) nach einem der Ansprüche 6 bis 8, **dadurch gekennzeichnet, dass** die Kammer (76) der Elektroabscheidungsvorrichtung (16) eine innere lichte Weite von kleiner-gleich 10 cm, bevorzugt von kleiner-gleich 5 cm, höchst bevorzugt von kleiner-gleich 2 cm aufweist.

10. Einrichtung (10) nach einem der Ansprüche 6 bis 9, **dadurch gekennzeichnet, dass** die Kammer der Elektroabscheidungsvorrichtung aus einem nichtleitenden Material gebildet ist.

11. Einrichtung (10) nach einem der Ansprüche 6 bis 10, **dadurch gekennzeichnet, dass** die Kammer der Elektroabscheidungsvorrichtung einen größeren Querschnitt aufweist als eine Zuleitung für den Gasstrom zu der Kammer der Elektroabscheidungsvorrichtung.

**Claims**

1. Method for extractively determining the concentration of one or multiple substances, wherein a gas stream (12) is fed into a measurement device (20), and at least one physical parameter is measured therein in order to determine the concentration of a substance contained in the gas stream, wherein a dust concentration is measured with the measurement device (20) by means of a scattered light measurement, a transmission measurement, or a triboelectric measurement, wherein, before or during at least one measurement, the gas stream (12) is treated before the measurement device (20) using an electrodeposition means (16), wherein

   a) a zero point determination of the measurement device (20) is performed such that the electrodeposition (16) takes place at a specific difference in potential for a predetermined time and, at the end of this time, a measurement (20) is performed which forms the zero point for the measurement device,
   and/or
   b) a linearity check is performed for the measurement device such that, for at least one specific first time period, a specific first, lower difference in potential is applied and, for a specific second time period, a specific second, stronger difference in potential is applied, and a measurement (20) is performed at least at the end of the respective first and second time periods, wherein enough successively increasing differences in potential are applied until the measurement signal no longer changes, and the zero point is reached.

2. The method according to claim 1, **characterized in that** the electrodeposition (16) is operated at a difference in potential of less than or equal to 30 kV, preferably less than or equal to 15 kV, and most preferably less than or equal to 10 kV.

3. The method according to claim 1 or 2, **characterized in that** a conditioning process is performed, preferably by drying and/or diluting the gas stream (12).

4. An apparatus (10) for extractively determining the concentration of one or multiple substances, comprising a device for feeding a gas stream (12) into a measurement device (20) in order to measure at least one physical parameter, and comprising a control and measurement signal evaluation apparatus (24), wherein the measurement device (20) comprises a means for determining dust concentration by means of scattered light measurement, transmission measurement, or triboelectric measurement, **characterized in that** an electrodeposition device (16) is arranged, in the direction of the gas stream (12) flow, before the measurement device (20), and the control and measurement signal evaluation device (24) is adapted

   a) to perform a zero point determination for the measurement apparatus (20) such that the electrodeposition (16) takes place at a specific difference in potential for a predetermined period of time and, at the end of this period of time, a measurement (20) is performed at the difference in potential determined, which measurement forms the zero point for the measurement device,
   and/or
   b) to perform a linearity check for the measurement device (20) such that, for at least one specific first time period, a specific first, lower difference in potential is applied and, for a specific second time period, a specific second, stronger difference in potential is applied, and a measurement (20) is performed at least at the end of the respective first and second time periods, wherein enough successively increasing differences in potential are applied until the measurement signal no longer changes, and the zero point is reached.

5. The apparatus (10) according to claim 4, **characterized in that** the apparatus (10) is designed to perform the method according to one of claims 1 to 3.

6. The apparatus (10) according to claim 4 or 5, **characterized in that** the electrodeposition device (10) is designed as a chamber (76), in which at least one metallic corona electrode (82), which is preferably designed as a metal needle, and at least one electrically conductive plate (78) are arranged.

7. The apparatus (10) according to claim 6, **characterized in that** the electrically conductive plate is designed as a sleeve (78) that is concentric to the corona electrode (82).

8. The apparatus (10) according to one of claims 6 or 7, **characterized in that** the chamber (76) for the electrodeposition device (16) has an interior clear height of less than or equal to 30 cm, preferably less than or equal to 10 cm, and most preferably less than or equal to 3 cm.

9. The apparatus according to one of claims 6 to 8, **characterized in that** the chamber (76) for the electrodeposition device (16) has an interior clear height of less than or equal to 10 cm, preferably less than or equal to 5 cm, and most preferably less than or equal to 2 cm.

**10.** The apparatus (10) according to one of claims 6 to 9, **characterized in that** the chamber for the electrodeposition device is made of a nonconductive material.

**11.** The apparatus (10) according to one of claims 6 to 10, **characterized in that** the chamber for the electrodeposition device has a greater cross-section than a supply line for the gas stream into the chamber for the electrodeposition device.

**Revendications**

**1.** Procédé de détermination extractive de la concentration d'une ou de plusieurs substances, dans lequel un flux de gaz (12) est amené à un dispositif de mesure (20) et au moins un paramètre physique est y mesuré pour déterminer ainsi la concentration d'une substance contenue dans le flux de gaz, dans lequel une concentration de poussières est déterminée avec le dispositif de mesure (20) par une mesure de lumière diffusée, une mesure de transmission ou une mesure triboélectrique, dans lequel le flux de gaz (12) est traité en amont du dispositif de mesure (20) avec un séparateur électrostatique (16) avant ou pendant au moins une mesure, dans lequel

  a) une détermination du point zéro du dispositif de mesure (20) est effectuée en ce que la séparation électrostatique (16) est effectuée pour une différence de potentiel déterminée pendant une durée spécifiée et, à la fin de la durée, une mesure (20) qui forme le point zéro du dispositif de mesure, est effectuée pour la différence de potentiel déterminée,
  et/ou
  b) un examen de linéarité du dispositif de mesure (20) est effectué en ce qu'une première différence de potentiel plus faible est appliquée au moins pendant une première durée déterminée et une deuxième différence de potentiel plus forte est appliquée pendant une deuxième durée déterminée et une mesure (20) est réalisée au moins à la fin respectivement de la première et de la deuxième durée, dans lequel des différences de potentiel devenant plus fortes successivement sont appliquées autant de fois jusqu'à ce que le signal de mesure ne se modifie plus et que le point zéro soit atteint.

**2.** Procédé selon la revendication 1, **caractérisé en ce que** l'électrodéposition (16) fonctionne avec une différence de potentiel inférieure ou égale à 30 kV, de manière préférée inférieure ou égale à 15 kV, idéalement inférieure ou égale à 10 kV.

**3.** Procédé selon la revendication 1 ou 2, **caractérisé**

en ce qu'un conditionnement est réalisé de manière préférée en tant que séchage et/ou dilution du flux de gaz (12).

**4.** Moyen (10) de détermination extractive de la concentration d'une ou de plusieurs substances, avec un dispositif pour amener un flux de gaz (12) à un dispositif de mesure (20) pour mesurer au moins un paramètre physique et avec un dispositif de commande et d'évaluation de signal de mesure (24), dans lequel le dispositif de mesure (20) présente des moyens pour déterminer la concentration de poussières par mesure de la lumière diffusée, mesure de la transmission ou mesure triboélectrique, **caractérisé en ce qu'**un dispositif de séparation électrostatique (16) est disposé en amont du système de mesure (20) dans le sens d'écoulement du flux de gaz (12) et le dispositif de commande et d'analyse de signal de mesure (24) est adapté,

  a) pour réaliser une détermination de point zéro du dispositif de mesure (20) **en ce que** la séparation électroacoustique (16) est effectuée pour une différence de potentiel déterminée pendant une durée spécifiée et une mesure (20) qui forme le point zéro du dispositif de mesure est réalisée à la fin de la durée pour la différence de potentiel déterminée,
  et/ou
  b) pour mettre en oeuvre un examen de linéarité du dispositif de mesure (20) **en ce qu'**une première différence de potentiel plus faible déterminée est appliquée pendant au moins une première durée déterminée et une deuxième différence de potentiel plus forte est appliquée pendant une deuxième durée déterminée et une mesure (20) est réalisée au moins à la fin respectivement de la première et de la deuxième durée, dans lequel des différences de potentiel devenant plus fortes successivement sont appliquées autant de fois jusqu'à ce que le signal de mesure ne se modifie plus et que le point zéro soit atteint.

**5.** Moyen (10) selon la revendication 4, **caractérisé en ce que** le système (10) est configuré pour réaliser le procédé selon l'une quelconque des revendications 1 à 3.

**6.** Moyen (10) selon la revendication 4 ou 5, **caractérisé en ce que** le dispositif de séparation électroacoustique (10) est réalisé en tant que chambre (76), dans laquelle sont disposées au moins une électrode d'émission (82) métallique, qui est réalisée de manière préférée en tant qu'aiguille métallique, et au moins une plaque (78) électriquement conductrice.

**7.** Moyen (10) selon la revendication 6, **caractérisé en**

**ce que** la plaque électriquement conductrice est réalisée en tant que douille (78) concentrique par rapport à l'électrode d'émission (82).

8. Moyen (10) selon l'une quelconque des revendications 6 ou 7, **caractérisé en ce que** la chambre (76) du dispositif de séparation électrostatique (16) présente une hauteur libre inférieure ou égale à 30 cm, de manière préférée inférieure ou égale à 10 cm, idéalement inférieure ou égale à 3 cm.

9. Moyen (10) selon l'une quelconque des revendications 6 à 8, **caractérisé en ce que** la chambre (76) du dispositif de séparation électroacoustique (16) présente une largeur libre intérieure inférieure ou égale à 10 cm, de manière préférée inférieure ou égale à 5 cm, idéalement inférieure ou égale à 2 cm.

10. Moyen (10) selon l'une quelconque des revendications 6 à 9, **caractérisé en ce que** la chambre du dispositif de séparation électroacoustique est formée à partir d'un métal non conducteur.

11. Moyen (10) selon l'une quelconque des revendications 6 à 10, **caractérisé en ce que** la chambre du dispositif de séparation électroacoustique présente une section transversale plus grande qu'un conduit d'arrivée pour le flux de gaz vers la chambre du dispositif de séparation électroacoustique.

Fig. 1

Fig. 2

EP 3 396 352 B1

16

82    72

78

70

Fig. 3

14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011082069 A1
- DE 102014017220 A1
- US 2011216317 A1
- DE 10121620 A1

**In der Beschreibung aufgeführte Nicht-Patentliteratur**

- **HARRY J. WHITE.** *Entstaubung industrieller Gase mit Elektrofiltern,* 1969